# EUROPÄISCHE PATENTSCHRIFT

(11) **EP 1 690 721 B1**
(45) Veröffentlichungstag und Bekanntmachung des Hinweises auf die Patenterteilung: **01.05.2013**
(21) Anmeldenummer: 06002397.5
(22) Anmeldetag: 07.02.2006
(51) Int. Cl.: B60J 10/00, B60J 10/12

(54) **Dichtungseinrichtung für einen aus einer Dachöffnung ausstellbaren Deckel eines Fahrzeugs**
Sealing arrangement for the liftable sun roof of a vehicle
Dispositif d'étanchéité pour le panneau élévable d'un toit de véhicule

(30) Priorität: 15.02.2005 DE 102005006689
(43) Veröffentlichungstag der Anmeldung: 16.08.2006
(73) Patentinhaber: Bayerische Motoren Werke Aktiengesellschaft, 80809 München (DE)
(72) Erfinder: Thiele, Florian, 85757 Karlsfeld (DE)

(56) Entgegenhaltungen:
- DE-A1- 19 901 855
- DE-U1- 20 306 449
- US-A1- 2003 155 794

## Beschreibung

Die Erfindung betrifft eine Dichtungseinrichtung an einem aus einer Dachöffnung ausstellbaren Deckel eines Fahrzeugs, mit den im Oberbegriff des Patentanspruches 1 angegebenen Merkmalen.

Eine derartige Dichtungseinrichtung ist bei BMW Fahrzeugen der Baureihe X5 zwischen zwei Glasdeckeln im Dachbereich vorgesehen, die in einer mit dem Fahrzeugdach bündigen Schließlage hintereinander angeordnet eine gemeinsame Dachöffnung verschließen. Am vorderen Rand des hinteren Glasdeckels ist eine Dichtung angeordnet, die in der Schließlage mit einer Abtropfleiste am hinteren Rand des vorderen Glasdeckels abdichtend zusammen wirkt. Beim Schließen der motorisch verstellbaren Glasdeckel könnte ein Körperteil einer Person oder ein Gegenstand in dem sich verringernden Spalt zwischen den Glasdeckeln eingeklemmt und verletzt oder beschädigt werden. Um dies zu vermeiden, ist eine Sicherungseinrichtung vorgesehen, die den Widerstand beim Schließen der Deckel und/oder den Stromverbrauch des Motorantriebs erfasst und bei einem von gespeicherten Normalwerten abweichenden Wert den Schließvorgang stoppt und ein sofortiges Öffnen der Glasdeckel bewirkt. Damit in der Phase beim Schließen der Glasdeckel, in der die Abtropfleiste an der Dichtung zur Anlage kommt, die damit verbundene Widerstandserhöhung bzw. Stromerhöhung des Motorantriebs von der Sicherungseinrichtung nicht als Einklemmfall fehlinterpretiert wird, weist die Abtropfleiste an ihrem unteren Rand eine größere konvexe Krümmung nach oben auf, als die Glasdeckel an ihren einander zugewandten Bereichen. Dadurch kommt die Abtropfleiste beim Schließen der Deckel zuerst mit ihren seitlich äußeren unteren Bereichen und danach in Fahrzeugquerrichtung nach innen zunehmend die anderen Bereiche der Abtropfleiste an der Dichtung zur Anlage, wodurch die Widerstandserhöhung bzw. der Stromanstieg des Motorantriebs gleichmäßiger erfolgt. Die seitlichen Bereiche der Abtropfleiste stehen nach unten vor und schränken dadurch den in der Ausstelllage des vorderen Deckels gebildeten Be- oder Entlüftungsspalt sowie den zur Verfügung stehenden Bauraum insbesondere in vertikaler Richtung zumindest etwas ein. Eventuell kommt auf Grund von Bauteiltoleranzen ein Seitenbereich der Abtropfleiste früher als der andere Seitenbereich an der Dichtung zur Anlage. In diesem Fall dürfte eine doppelte Widerstandserhöhung oder eine doppelte Stromerhöhung des Motorantriebs erfolgen, die von der Sicherungseinrichtung unzutreffend als Einklemmfall interpretiert werden kann. Da die untere Kontur der Abtropfleiste stärker als die Oberseiten der Glasdeckel nach oben gekrümmt ist, dürfte ein Einklemmen eines Gegenstandes oder eines Körperteiles in dem Spalt zwischen den zumindest teilweise geöffneten Glasdeckeln abhängig von der jeweiligen seitlichen Position des Gegenstandes bzw. Körperteiles zu unterschiedlichen Zeitpunkten nach dem Einleiten des Schließvorganges erfolgen, wodurch die Sicherungseinrichtung über einen entsprechend längeren Zeitraum aktiviert sein muss.

Eine gattungsgemäße Dichtungseinrichtung ist aus 20306449 U bekannt.

Der Erfindung liegt die Aufgabe zu Grunde, eine Dichtungseinrichtung mit den Merkmalen im Oberbegriff des Patentanspruches 1 anzugeben, die eine gleichmäßigere Widerstanderhöhung oder Stromerhöhung des Motorantriebs des schließenden Deckels bewirkt, toleranzunempfindlicher ist und den Be- oder Entlüftungsspalt nicht oder weniger einschränkt.

Diese Aufgabe ist durch die Merkmale im Patentanspruch 1 gelöst. Vorteilhafte Ausgestaltungen der Erfindung sind den Unteransprüchen entnehmbar.

Beim Schließen des mit seiner Hinterkante ausgestellten Deckels kommt die Anlagefläche des Dichtteiles zunächst in Fahrzeugquerrichtung in Fahrzeugmitte an dem Dichtelement zur Anlage. Danach kommen seitlich daran anschließende Seitenbereiche des Dichtelements zunehmend mit dem Dichtteil in Kontakt, wodurch eine gleichmäßigere, beispielsweise lineare Widerstandserhöhung oder Stromerhöhung des Motorantriebs des Deckels bewirkt wird. Die Widerstandserhöhung oder Stromerhöhung ist selbst dann gleichmäßiger, wenn die seitlichen Kontaktbereiche des Dichtelements mit dem Dichtteil beim Schließen des Deckels beispielsweise auf Grund von Bauteiltoleranzen gegenüber der Fahrzeugmitte eventuell zeitlich veränderlich unsymmetrisch verlaufen. Das Dichtelement und das Dichtteil erfordern keinen von der Kontur des Deckels oder eines daran angrenzenden Teiles nach unten vorstehenden Bereich, wodurch bei ausgestelltem Deckel der gebildete Be- oder Entlüftungsspalt nicht eingeschränkt ist.

Ein Ausführungsbeispiel der Erfindung wird nachfolgend anhand einer Zeichnung näher erläutert. Es zeigen
- Fig. 1: eine seitliche Schnittansicht der zwischen zwei Glasdeckeln eines Kraftfahrzeugs angeordneten Dichtungseinrichtung bei geschlossenen Glasdeckeln,
- Fig. 2: eine Fig. 1 entsprechende Schnittansicht bei jeweils mit der Hinterkante ausgestellten Glasdeckeln und
- Fig. 3: eine perspektivische, teilweise geschnittene Ansicht auf die am hinteren Rand des vorderen Glasdeckels angeordnete Dichtteilleiste eines Dichtteiles.

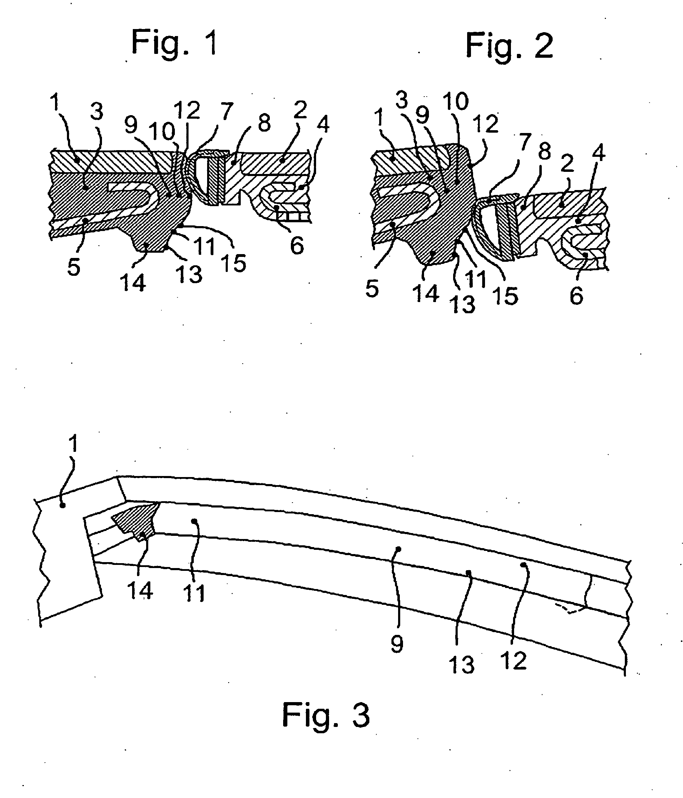

Die in Figur 1 dargestellte Dichtungseinrichtung dichtet den Spalt zwischen einem vorderen Glasdeckel 1 und einem hinteren Glasdeckel 2 ab, wenn die beiden Glasdeckel 1, 2 wie in der Figur dargestellt in eine Schließlage verstellt sind, in der die Glasdeckel 1, 2 hintereinander angeordnet eine gemeinsame Dachöffnung im Dachbereich eines Kraftfahrzeugs etwa außenhautbündig verschließen. Jeder Glasdeckel 1, 2 ist von einem Rahmen 3, 4 beispielsweise aus dem Kunststoff PUR umgeben, der durch ein zugeordnetes Versteifungselement 5 bzw. 6 verstärkt ist.

Ein als Schlauchdichtung ausgebildetes Dichtelement 7 ist am vorderen Rand 8 des Rahmens 4 des hinteren Glasdeckels 2 in Fahrzeugquerrichtung angeordnet und liegt an einem Dichtteil 9 abdichtend an, das durch den hinteren, in Fahrzeugquerrichtung verlaufenden Rand des Rahmens 3 des vorderen Glasdeckels 1 gebildet ist.

In Figur 2 befinden sich die beiden Glasdeckel 1, 2 in einer Winkellage, in der beim Schließen der jeweils mit der Hinterkante nach oben ausgestellten Glasdeckel 1, 2 ein in Fahrzeugquerrichtung mittlerer Bereich 10 des Dichtteiles 9 an dem Dichtelement 7 anliegt. Das Dichtteil 9 weist eine derart in vertikaler Richtung und zu den Fahrzeugseiten veränderlich gekrümmte Anlagefläche 11 auf, dass die Anlagefläche 11 beim Schließen der ausgestellten Glasdeckel 1, 2 zunächst in Fahrzeugquerrichtung in Fahrzeugmitte und danach zunehmend mit den seitlich daran anschließenden Seitenbereichen jeweils des Dichtelements 7 in Anlage kommt.

Dadurch wird erreicht, dass sich die durch Reibung zwischen dem Dichtteil 9 und dem Dichtelement 7 bewirkte Widerstandserhöhung bzw. eine damit verbundene Stromerhöhung des die Glasdeckel 1, 2 motorisch verstellenden, nicht dargestellten Motorantriebs ohne eine sprunghafte Änderung etwa linear erhöht. Eine nicht dargestellte Sicherungseinrichtung überwacht die Widerstandserhöhung und/oder die Stromerhöhung des Motorantriebs und stoppt bei einer von gespeicherten Normalwerten abweichenden, übermäßigen Widerstandserhöhung bzw. Stromerhöhung den Schließvorgang der Glasdeckel 1, 2 und veranlasst ein sofortiges motorisches Öffnen der Glasdeckel 1, 2. Bei einer übermäßigen Widerstandserhöhung bzw. Stromerhöhung des Motorantriebs beim Schließen der Glasdeckel 1, 2, geht die Sicherungseinrichtung davon aus, dass sich ein Körperteil oder Gegenstand in dem Spalt zwischen den beiden Glasdeckel 1, 2 befindet. Durch das in diesem Fall bewirkte Anhalten der Schließbewegung und das sofortige Öffnen der Glasdeckel 1, 2 wird ein Einklemmen und damit eine Verletzung oder Beschädigung des in den Spalt zwischen den Glasdeckeln 1, 2 eingebrachten Körperteiles bzw. Gegenstandes vermieden.

Den Figuren 1 und 2 ist zu entnehmen, dass die Anlagefläche 11 in dem jeweils dargestellten, in Fahrzeugquerrichtung mittleren Bereich einen in Schließlage des vorderen Glasdeckels 1 etwa vertikalen Flächenbereich 12 aufweist, der in der Schließlage an dem Dichtelement 7 anliegt. In den Figuren 1 und 2 ist ein in Fahrzeugquerrichtung mittlerer Erstkontaktbereich 13 erkennbar, der beim Schließen des vorderen Glasdeckels 1 zuerst an dem Dichtelement 7 zur Anlage kommt und in der Schließlage der Glasdeckel 1, 2 vor und unter dem Flächenbereich 12 angeordnet ist. Der Erstkontaktbereich 13 befindet sich in der Schließlage der Glasdeckel 1, 2 vor und unter dem Dichtelement 7.

Am hinteren unteren Randbereich des vorderen Glasdeckels 1 ist eine nach unten abstehende Nase 14 ausgebildet, die mit ihrem hinteren unteren Eckbereich oder einem daran anschließenden, nach oben verlaufenden hinteren Wandbereich den Erstkontaktbereich 13 bildet, wobei der Wandbereich in der Schließlage des vorderen Glasdeckels 1 etwa vertikal nach oben verläuft.

Im Übergangsbereich vom Erstkontaktbereich 13 zum Flächenbereich 12 weist das Dichtteil 9 eine bei geschlossenem Glasdeckel 1 zum Fahrzeugheck konkave Kontur und dann nach einem etwa geraden Übergangsbereich 15 eine konvexe Kontur auf. Die Anlagefläche 11 verläuft in Schließlage des vorderen Glasdeckels 1 etwa in Höhe des Erstkontaktbereiches 13 von der Fahrzeugmitte zu den Seiten des vorderen Glasdeckels 1 etwas nach vorne.

Das Dichtteil 9 ist durch eine an den vorderen Glasdeckel 1 angeformte Dichtteilleiste gebildet, die sich etwa über die Breite des vorderen Glasdeckels 1 an seiner hinteren Bereich erstreckt und durch das hintere Querteil des Rahmens 3 gebildet ist.

In Figur 3 ist das Dichtteil 9 in einer perspektivischen Ansicht von links unten auf die Anlagefläche 11 dargestellt, in der ein linker äußerer Bereich des Dichtteiles 9 geschnitten dargestellt ist. Der in Fahrzeugquerrichtung mittlere Bereich des Dichtteiles 9 ist in seiner Kontur hinten durch eine ausgezogene Linie und im unteren vorderen Bereich durch eine unterbrochene Linie dargestellt, wodurch die sich in Höhenrichtung und in Fahrzeugquerrichtung ändernde hintere Kontur der Dichtfläche 9 besser erkennbar ist. Die Kontur der Dichtfläche 9 berücksichtigt, dass beim etwa gleichzeitigen Ausstellen der beiden Glasdeckel 1, 2 der hintere Glasdeckel 2 etwas nach vorne und beim Schließen der beiden Glasdeckel 1, 2 nach hinten verstellt wird. Die Relativbewegung zwischen den beiden Glasdeckeln 1, 2 beim Öffnen und Schließen ist somit in der Kontur der Dichtfläche 9 in Höhen- und Querrichtung berücksichtigt.

Bei dem Ausführungsbeispiel ist die von dem vorderen Glasdeckel 1 verschließbare Dachöffnung durch den vorderen Bereich der von dem vorderen und hinteren Glasdeckel 1, 2 verschließbaren gemeinsamen Dachöffnung gebildet.

Ebenso kann eine Dachöffnung vorgesehen sein, die lediglich von einem Glasdeckel verschließbar ist. Das Dichtteil oder Dichtelement kann an dem hinteren Rand des Deckels oder an der von dem Deckel verschließbaren Dachöffnung oder an einem Teil angeordnet sein, das den hinteren Rand der von dem Deckel verschließbaren Dachöffnung begrenzt. Das andere Dichtelement oder Dichtteil ist dann an dem hinteren Rand des Deckels oder an einem daran befestigten Bauteil angeordnet. Der bei dem Ausführungsbeispiel als Glasdeckel ausgebildete Deckel kann ein beliebiger, beispielsweise undurchsichtiger Deckel sein.

## Patentansprüche

1. Dichtungseinrichtung an einem aus einer Dachöffnung ausstellbaren Deckel (1) eines Fahrzeugs, mit einem elastischen Dichtelement (7) am hinteren Rand der von dem Deckel verschließbaren Dachöffnung oder des Deckels, das bei geschlossenem Deckel an einem Dichtteil (9) an dem anderen Teil, an dem Deckel oder an einem den hinteren Rand der Dachöffnung begrenzenden Wandbereich anliegt, **dadurch gekennzeichnet, dass** das Dichtteil (9) eine derart zumindest bereichsweise gekrümmte und von der Fahrzeugmitte zu den Seiten des Deckels (1) veränderliche Anlagefläche (11) aufweist, dass die Anlagefläche (11) beim Schließen des ausgestellten Deckels (1) zunächst in Fahrzeugquerrichtung in Fahrzeugmitte und danach zunehmend mit den seitlich daran anschließenden Seitenbereichen jeweils des Dichtelements (7) in Anlage kommt.

2. Dichtungseinrichtung nach Anspruch 1, **dadurch gekennzeichnet, dass** die Anlagefläche (11) zumindest in einem in Fahrzeugquerrichtung mittleren Bereich einen in Schließlage des Deckels (1) etwa vertikalen Flächenbereich (12) aufweist, der in der Schließlage an dem Dichtelement (7) anliegt.

3. Dichtungseinrichtung nach Anspruch 2, **dadurch gekennzeichnet, dass** die Anlagefläche zumindest in einem in Fahrzeugquerrichtung mittleren Bereich einen Erstkontaktbereich (13) aufweist, der beim Schließen des Deckels (1) zuerst an dem Dichtelement (7) zur Anlage kommt und in der Schließlage des Deckels (1) vor und unter dem Flächenbereich (12) angeordnet ist.

4. Dichtungseinrichtung nach Anspruch 3, **dadurch gekennzeichnet, dass** der Erstkontaktbereich (13) in Schließlage des Deckels (1) vor und unter dem Dichtelement (7) angeordnet ist.

5. Dichtungseinrichtung nach Anspruch 3 oder 4, **dadurch gekennzeichnet, dass** am hinteren unteren Randbereich des Deckels eine nach unten vorstehende Nase (14) ausgebildet ist, die mit ihrem hinteren unteren Eckbereich oder mit einem daran anschließenden, nach oben verlaufenden Wandbereich den Erstkontaktbereich (13) bildet, wobei zusätzlich dieser Wandbereich in Schließlage des Deckels (1) etwa vertikal nach oben verlaufen kann.

6. Dichtungseinrichtung nach einem der Ansprüche 3 bis 5, **dadurch gekennzeichnet, dass** das Dichtteil (9) im Übergangsbereich vom Erstkontaktbereich (13) zum Flächenbereich (12) eine bei geschlossenem Deckel (1) zum Fahrzeugheck konkave und dann eventuell nach einem etwa geraden Übergangsbereich (15) konvexe Kontur aufweist.

7. Dichtungseinrichtung nach einem der Ansprüche 1 bis 6, **dadurch gekennzeichnet, dass** das Dichtteil (9) durch eine an den Deckel (1) angeformte Dichtteilleiste gebildet ist, die sich etwa über die Breite des Deckels (1) an seinem hinteren Bereich erstreckt.

8. Dichtungseinrichtung nach einem der Ansprüche 1 bis 7, **dadurch gekennzeichnet, dass** das Dichtelement (7) eine Schlauchdichtung ist.

9. Dichtungseinrichtung nach einem der Ansprüche 1 bis 8, **dadurch gekennzeichnet, dass** der Deckel (1) ein vor einem hinteren Deckel (2) angeordneter vorderer Deckel (1) ist und das am hinteren Rand der von dem vorderen Deckel (1) verschließbaren Dachöffnung angeordnete Dichtelement (7) oder Dichtteil am vorderen Rand des hinteren Deckels (2) angeordnet ist, der in seiner Schließstellung eine hintere Dachöffnung verschließt, die mit der von dem vorderen Deckel (1) verschließbaren Dachöffnung eine gemeinsame Dachöffnung bildet.

10. Dichtungseinrichtung nach einem der Ansprüche 5 bis 9, **dadurch gekennzeichnet, dass** die Anlagefläche (11) in Schließlage des Deckels (1) etwa in Höhe des Erstkontaktbereiches (13) von der Fahrzeugmitte zu den Seiten des Deckels (1) etwas nach vorne verläuft und sich das Dichtelement (7) in Fahrzeugquerrichtung erstreckt.

## Claims

1. A seal arrangement on a panel (1) which can be moved out of a roof opening in a vehicle, comprising a resilient sealing element (7) at the rear edge of the panel or the roof opening closable by the panel, the sealing element, when the panel is closed, abutting a sealing part (9) on the other part, on the panel or on a wall region bounding the rear edge of the roof opening, **characterised in that** the sealing part (9) has a contact surface (11) curved at least in places and variable from the middle of the vehicle to the sides of the panel (1), and when the moved-out cover (1) is closed, the contact surface (11) moves in the transverse direction of the vehicle into the middle thereof and then increasingly abuts the laterally adjoining side regions of the sealing element (7).

2. A seal arrangement according to claim 1, **characterised in that** the contact surface (11), at least in a middle region in a transverse direction of the vehicle, has a flat region (12) which is approximately vertical when the panel (1) is closed and abuts the sealing element (7) when in the closed position.

3. A seal arrangement according to claim 2, **characterised in that** the contact surface, at least in a middle region in the transverse direction of the vehicle, has a first contact region (13) which, when the panel (1) is being closed, firstly abuts the sealing element (7) and is disposed in front of and under the flat region (12) when the panel (1) is in the closed position.

4. A seal arrangement according to claim 3, **characterised in that** the first contact region (13) is disposed in front of and under the sealing element (7) when the panel (1) is in the closed position.

5. A seal arrangement according to claim 3 or claim 4, **characterised in that** a downwardly projecting lug (14) is formed on the rear bottom edge region of the panel and its rear bottom corner region or an adjoining upwardly extending wall region forms the first contact region (13), wherein also the said wall region can extend approximately vertically upwards when the panel (1) is in the closed position.

6. A seal arrangement according to any of claims 3 to 5, **characterised in that** in the transition region from the first contact region (13) to the flat region (12), the sealing part (9) has a contour which is concave towards the rear of the vehicle when the panel (1) is closed and then, if required, is convex after an approximately straight transition region (15).

7. A seal arrangement according to any of claims 1 to 6, **characterised in that** the sealing part (9) is in the form of a strip integrally moulded on the panel (1) and extending approximately over the width of the panel (1) at its rear region.

8. A seal arrangement according to any of claims 1 to 7, **characterised in that** the sealing element (7) is a tubular seal.

9. A seal arrangement according to any of claims 1 to 8, **characterised in that** the panel (1) is a front panel (1) disposed in front of a rear panel (2), and the sealing element (7) or sealing part disposed on the rear edge of the roof opening closable by the front panel (1) is disposed at the front edge of the rear panel (2) which, when in the closed position, closes a rear roof opening which forms a common roof opening with the opening closable by the front panel (1).

10. A seal arrangement according to any of claims 5 to 9, **characterised in that** when the panel (1) is in the closed position, the contact surface (11), approximately at the level of the first contact area (13), extends somewhat forwards from the middle of the vehicle to the sides of the panel (1), and the sealing element (7) extends in the transverse direction of the vehicle.

## Revendications

1. Installation d'étanchéité d'un panneau (1) relevable pour une ouverture de toit de véhicule comportant un élément de joint (7) élastique au bord arrière du panneau ou de l'ouverture fermée par le panneau, et qui, lorsque le panneau est fermé, s'applique contre la partie de joint (9) de l'autre pièce, contre le panneau ou la zone de paroi délimitant le bord arrière de l'ouverture du toit,
installation **caractérisée en ce que**
- la partie de joint (9) a une surface d'appui (11) au moins cintrée par zone et variable à partir du milieu du véhicule vers les côtés du panneau (1),
- la surface d'appui (11) lors de la fermeture du panneau (1) relevé, vient tout d'abord en appui au milieu du véhicule dans la direction transversale de celui-ci puis progressivement en appui contre les zones latérales adjacentes de l'élément de joint (7).

2. Installation d'étanchéité selon la revendication 1,
**caractérisée en ce que**
la surface d'appui (11) comporte une zone de surface (12) sensiblement verticale en position de fermeture du panneau (1), au moins dans la zone médiane selon la direction transversale du véhicule et qui s'applique en position de fermeture contre l'élément de joint (7).

3. Installation d'étanchéité selon la revendication 2,
**caractérisée en ce que**
la surface d'appui, au moins dans la zone médiane selon la direction transversale du véhicule, comporte une zone de premier contact (13) qui, à la fermeture du panneau (1), vient d'abord en appui contre l'élément de joint (7) et en position de fermeture du panneau (1), cette zone se trouve devant et sous la zone de surface (12).

4. Installation d'étanchéité selon la revendication 3,
**caractérisée en ce que**
la zone de premier contact (13) se trouve devant et sous l'élément d'étanchéité (7) lorsque le panneau (1) est en position fermée.

5. Installation d'étanchéité selon la revendication 3 ou 4,
**caractérisée en ce que**
la zone de bord arrière inférieure du panneau a une forme de bec (14) en saillie vers le bas et constituant la zone de premier contact (13) avec sa zone de coin inférieure, arrière, ou avec une zone de paroi adjacente, dirigée vers le haut,
et en plus cette zone de paroi est dirigée sensiblement verticalement vers le haut en position de fermeture du panneau (1).

6. Installation d'étanchéité selon l'une des revendications 3 à 5,
**caractérisée en ce que**
la partie de joint (9) dans la zone de transition entre la zone de premier contact (13) et la zone de surface (12), lorsque le panneau (1) est fermé, a un contour concave vers l'arrière du véhicule puis éventuellement un contour convexe après une zone transitoire (15) sensiblement droite.

7. Installation d'étanchéité selon l'une des revendications 1 à 6,
**caractérisée en ce que**
la partie de joint (9) est réalisée par une partie d'un profilé de joint formé sur le panneau (1) qui s'étend sensiblement sur la largeur de la zone arrière du panneau (1).

8. Installation d'étanchéité selon l'une des revendications 1 à 7,
**caractérisée en ce que**
l'élément de joint (7) est un joint tubulaire.

9. Installation d'étanchéité selon l'une des revendications 1 à 8,
**caractérisée en ce que**
le panneau est un panneau avant (1) installé devant un panneau arrière (2) et l'élément de joint (7) installé sur le bord arrière de l'ouverture de toit fermée par le panneau avant (1) ou la partie de joint du bord avant du panneau arrière (2) qui ferme une ouverture arrière de toit dans sa position de fermeture, constitue l'ouverture de toit commune fermée par le panneau avant (1).

10. Installation d'étanchéité selon l'une des revendications 5 à 9,
**caractérisée en ce qu'**
en position de fermeture du panneau (1), la surface d'appui (11) se trouve sensiblement à hauteur de la zone de premier contact (13) en s'étendant à partir du milieu du véhicule vers les côtés du panneau (1) sensiblement vers l'avant et l'élément de joint (7) s'étend dans la direction transversale du véhicule.
